# EUROPÄISCHE PATENTANMELDUNG

(11) **EP 3 088 649 A1**
(43) Veröffentlichungstag der Anmeldung: **02.11.2016**
(21) Anmeldenummer: 16156483.6
(22) Anmeldetag: 19.02.2016
(51) Int. Cl.: E05F 5/00, F16F 15/02, F16F 1/12

(54) **VERSTELLBARES FEDER-DÄMPFERSYSTEM**

(30) Priorität: 27.04.2015 DE 202015003023 U
(71) Anmelder: Gebr. Willach GmbH, 53809 Ruppichteroth (DE)
(72) Erfinder: Willach, Jens Dr., 53783 Eitorf (DE); Schmidt, Klaus-Dieter, 51588 Nümbrecht (DE)
(74) Vertreter: dompatent von Kreisler Selting Werner - Partnerschaft von Patent- und Rechtsanwälten mbB

(57) **Zusammenfassung**

Bei einem Dämpfungssystem (1) mit Einzugsfunktion mit einer Dämpfungseinrichtung (3) zum Abbremsen einer Relativbewegung zwischen dem Dämpfungssystem (1) und einem mit dem Dämpfungssystem (1) zusammenwirkenden Koppler (104), mit einem parallel zu der Dämpfungseinrichtung (3) wirkenden Federsystem (5) mit einer Federeinrichtung (7), wobei eine Halterung (11) mit einem ersten Ende (7a) der Federeinrichtung (7) verbunden ist und über die Halterung (11) das erste Ende (7a) der Federeinrichtung (7) ortsfest befestigbar ist, und mit einem mit dem Koppler (104) zusammenwirkenden Eingreifteil (9), wobei das Eingreifteil (9) mit der Dämpfungseinrichtung (3) und mit einem zweiten Ende (7b) der Federeinrichtung (7) verbunden ist, und wobei das Federsystem (5) in einer Ausgangsstellung des Eingreifteils (9) eine vorgegebene Federvorspannung aufweist, ist vorgesehen, dass das Federsystem (5) eine Verstelleinrichtung (13) zur Verstellung der vorgegebenen Federvorspannung aufweist, wobei über die Verstelleinrichtung (13) die Federvorspannung zumindest eines Teils der Federeinrichtung (7) verstellbar ist.

## Beschreibung

Die vorliegende Erfindung betrifft ein Dämpfungssystem mit Einzugsfunktion sowie eine Schiebetür mit einem derartigen Dämpfungssystem.

Dämpfungssysteme mit Einzugsfunktion werden beispielsweise bei Schiebetüren oder in Möbelstücken eingesetzt, um bewegliche Teile in ihrer Bewegung abzubremsen und in ihre Endposition zu führen.

Die bekannten Dämpfungssysteme weisen eine Dämpfungseinrichtung zum Abbremsen einer Bewegung eines Kopplers, der beispielsweise mit der Schiebetür verbunden ist, und eine parallel zu der Dämpfungseinrichtung angeordneten Federeinrichtung auf. Ein Eingreifteil wirkt mit dem Koppler zusammen, wobei das Eingreifteil mit der Dämpfungseinrichtung und der Federeinrichtung verbunden ist. Sobald der Koppler in das Eingreifteil eingreift, wird seine Geschwindigkeit mittels der Dämpfungseinrichtung abgebremst. Die Federeinrichtung bewirkt, dass das Eingreifteil und der Koppler nicht vollständig vor Erreichen der Endstellung abgebremst werden, sondern die Federeinrichtung zieht den Koppler und das Eingreifteil sanft in die Endstellung. Dadurch wird vermieden, dass beispielsweise beim Fahren einer Glasschiebetür in ihre Endstellung ein hartes Anschlagen der Glasschiebetür erfolgt, so dass Beschädigungen verhindert werden.

Derartige Dämpfungssysteme können stationär angeordnet sein, so dass sie die Bewegung des Kopplers abbremsen, oder können auch als mitfahrende Dämpfungssysteme eingesetzt werden, bei denen der Koppler stationär ist.

Ein derartiges Dämpfungssystem ist beispielsweise aus DE 20 2008 008 006 U1 bekannt.

Die Dämpfungssysteme mit Einzugsfunktion werden heutzutage als Baueinheit vertrieben, wobei angegeben wird, welche Last von dem Dämpfungssystem maximal aufgenommen bzw. bewegt werden kann.

Da bei dem Öffnen eines mit einem Dämpfungssystem mit Einzugsfunktion zusammenwirkenden Gegenstandes die Federeinrichtung bis zum Erreichen ihrer Ausgangsstellung vorgespannt wird, muss der Nutzer eine zusätzliche Kraft für die Spannung der Federeinrichtung aufbringen. Daher wird grundsätzlich versucht, ein Dämpfungssystem mit möglichst schwacher Federeinrichtung zu verwenden und somit den Einsatzbereich eines Dämpfungssystems voll auszureizen, damit eine möglichst geringe Kraft für das Öffnen beispielsweise einer Schiebetür oder einer Schublade notwendig ist.

Aus diesem Grund kann es bei der Montage eines Dämpfungssystems mit Einzugsfunktion zu Problemen kommen, wenn beispielsweise die durch die Federeinrichtung zu ziehende Last größer als ursprünglich angenommen ist, weil beispielsweise der Rollwiderstand einer Schiebetür höher ist. In diesem Fall muss ein komplett unterschiedliches Dämpfungssystem verwendet werden. Ähnliche Probleme können auftreten, wenn aufgrund von Verschleiß der Rollwiderstand einer Schiebetür nach längerem Gebrauch höher ist, so dass es in diesem Fall vorkommen kann, dass die Federeinrichtung die Schiebetür nicht in ihre Endposition ziehen kann. Auch in diesem Fall ist es häufig notwendig, das vorhandene Dämpfungssystem durch ein neueres, größeres auszutauschen.

Es ist daher die Aufgabe der vorliegenden Erfindung, ein Dämpfungssystem mit Einzugsfunktion der eingangs genannten Art zu schaffen, das einen flexibleren Einsatz ermöglicht.

Es ist ferner die Aufgabe der vorliegenden Erfindung, eine Schiebetür mit einem derartigen Dämpfungssystem bereitzustellen.

Das erfindungsgemäße Dämpfungssystem mit Einzugsfunktion ist definiert durch die Merkmale des Anspruchs 1.

Das erfindungsgemäße Dämpfungssystem mit Einzugsfunktion weist eine Dämpfungseinrichtung zum Abbremsen einer Relativbewegung zwischen dem Dämpfungssystem und einem mit dem Dämpfungssystem zusammenwirkenden Koppler und ein parallel zu der Dämpfungseinrichtung wirkendes Federsystem mit einer Federeinrichtung auf. Eine Halterung ist mit einem ersten Ende der Federeinrichtung verbunden und über die Halterung ist das erste Ende der Federeinrichtung ortsfest befestigbar. Das Dämpfungssystem weist ferner ein mit dem Koppler zusammenwirkendes Eingreifteil auf, wobei das Eingreifteil mit der Dämpfungseinrichtung und mit einem zweiten Ende der Federeinrichtung verbunden ist. Das Federsystem weist in einer Ausgangsstellung des Eingreifsteils eine vorgegebene Federvorspannung auf. Die Erfindung ist dadurch gekennzeichnet, dass das Federsystem eine Verstelleinrichtung zur Verstellung der vorgegebenen Federvorspannung aufweist, wobei über die Verstelleinrichtung die Federvorspannung zumindest eines Teils der Federeinrichtung verstellbar ist.

Unter Abbremsen einer Relativbewegung zwischen dem Dämpfungssystem und einem mit dem Dämpfungssystem zusammenwirkenden Koppler wird im Rahmen dieser Erfindung verstanden, dass sich entweder das Dämpfungssystem oder der Koppler bewegt. Mit anderen Worten: Das Dämpfungssystem kann stationär angeordnet sein und der Koppler führt eine Bewegung aus. Alternativ kann der Koppler auch stationär angeordnet sein und das Dämpfungssystem führt die Bewegung aus.

Das erfindungsgemäße Dämpfungssystem hat den Vorteil, dass die vorgegebene Federvorspannung verstellt werden kann und somit an den Gegenstand, in dem das Dämpfungssystem zum Einsatz kommt, angepasst werden kann. Beim Einbau beispielsweise in eine Schiebetür kann vor Ort die Federvorspannung des Federsystems derart eingestellt werden, dass die Schiebetür in ihre Endstellung mittels der Einzugsfunktion des Dämpfungssystems verfahren wird und dennoch die aufzubringende Kraft beim Öffnen der Schiebetür gering gehalten wird. Ferner ermöglicht das erfindungsgemäße Dämpfungssystem, dass die Federvorspannung des Federsystems nachträglich veränderbar ist, so dass beispielsweise bei einer aufgrund von Verschleiß entstehenden größeren Last für das Zuziehen der Schiebetür die Federvorspannung erhöht werden kann, ohne dass es eines Austausches des Dämpfungssystems bedarf. Das erfindungsgemäße Dämpfungssystem ist ferner auch für die Verwendung mit unterschiedlichen Türmassen geeignet, da die Federvorspannung entsprechend angepasst werden kann. Hersteller von Schiebetüren müssen somit nicht eine Vielzahl von unterschiedlichen Dämpfungssystemen für unterschiedliche Türsysteme bereithalten. Das erfindungsgemäße Dämpfungssystem mit Einzugsfunktion ist somit besonders flexibel einsetzbar.

Vorzugsweise ist vorgesehen, dass die Verstelleinrichtung durch die Halterung und eine Befestigungseinrichtung gebildet ist, wobei die Halterung an verschiedenen Positionen an der Befestigungseinrichtung befestigbar ist. Durch eine derartige Befestigungseinrichtung lässt sich die Federvorspannung in vorteilhafter Weise verändern, indem die Länge der Feder verändert wird, so dass der Federweg des Federsystems in der Ausgangsstellung verändert ist. Hierzu ist anzumerken, dass bei einer derartigen Ausbildung des erfindungsgemäßen Dämpfungssystems die Federeinrichtung als eine Feder ausgestaltet sein muss, bei der die Federkraft über zunehmenden Federweg ansteigt, d.h. die Federkennlinie weist entweder einen linearen oder einen degressiven oder einen progressiven Verlauf auf.

Dabei kann vorgesehen sein, dass die Befestigungseinrichtung ein Lochraster aufweist, an dem die Halterung befestigbar ist. Das Lochraster erstreckt sich vorzugsweise in Längsrichtung des Dämpfungssystems. Die Halterung, in der das erste Ende der Federeinrichtung befestigbar ist, kann somit auf einfache Art und Weise an unterschiedlichen Positionen an der Befestigungseinrichtung befestigt werden. Dies kann beispielsweise mittels Schrauben oder Bolzen erfolgen. Alternativ zu dem Lochraster kann auch ein Langloch vorgesehen sein.

Die Erfindung kann in vorteilhafter Weise ein Gehäuse vorsehen, in dem die Dämpfungseinrichtung und das Federsystem zumindest teilweise aufgenommen sind. Dadurch ist das Dämpfungssystem als kompakte Baueinheit verwirklichbar und durch das Gehäuse können die Dämpfungseinrichtung und das Federsystem durch Einflüsse von außen geschützt werden.

Dabei kann vorzugsweise vorgesehen sein, dass das Gehäuse die Befestigungseinrichtung bildet. Dadurch ist die Befestigungseinrichtung in dem Dämpfungssystem festgelegt und beispielsweise ein Lochraster in der Befestigungseinrichtung weist definierte Positionen auf. Einem Nutzer können somit mittels des Lochrasters Federvorspannungswerte vorgegeben werden, wodurch die Bedienung des erfindungsgemäßen Dämpfungssystems besonders einfach ist.

Selbstverständlich besteht auch die Möglichkeit, dass die Halterung außerhalb des Dämpfungssystems befestigt wird. Beispielsweise kann das Dämpfungssystem in einer Laufschiene einer Schiebetür angeordnet werden, wobei die Halterung, beispielsweise mittels eines Kulissensteins, separat in der Laufschiene befestigt wird.

In einem besonders bevorzugten Ausführungsbeispiel der Erfindung ist vorgesehen, dass die Dämpfungseinrichtung mit dem von dem Eingreifteil abgewandten Ende verschwenkbar an dem Gehäuse befestigt ist. Dadurch lässt sich die Dämpfungseinrichtung aus dem Gehäuse heraus schwenken und der Abstand der Halterung, die am ersten Ende der Federeinrichtung befestigt ist, zu dem mit dem zweiten Ende der Federeinrichtung verbundenen Eingreifteil wird verkürzt, wodurch die Federeinrichtung vollkommen oder nahezu vollkommen entspannt ist. Bei einer Verstellung der Federspannung mittels der Verstelleinrichtung, bei der die Position der Halterung verändert wird, ist in der verschwenkten Stellung der Dämpfungseinrichtung die Positionierung der Halterung somit vereinfacht, da diese nicht entgegen einer hohen Federkraft der Federeinrichtung erfolgen muss. Hierzu ist anzumerken, dass im Gebrauch das Federsystem auch in der Endstellung stets eine Federvorspannung aufweist, da anderenfalls das Federsystem nicht in die Endstellung verfahren würde. Somit ist bei einer Veränderung der Position der Halterung an der Befestigungseinrichtung das Überwinden der Federvorspannung problematisch. Durch die verschwenkbare Anordnung der Dämpfungseinrichtung wird dieses Problem gelöst. Nach Befestigung der Halterung in der Befestigungseinrichtung kann dann durch das Zurückschwenken der Dämpfungseinrichtung in ihre Grundposition die Federeinrichtung vorgespannt werden.

Vorzugsweise ist vorgesehen, dass die Federeinrichtung als Spiralfeder ausgebildet ist. Derartige Federn sind bei Dämpfungssystemen mit Einzugsfunktion aufgrund ihres kompakten Aufbaus und ihrer Federungseigenschaften besonders vorteilhaft.

Bei dem erfindungsgemäßen Dämpfungssystem kann auch vorgesehen sein, dass die Verstelleinrichtung, vorzugsweise die Halterung, ein Angreifelement aufweist, das an verschiedenen Positionen an der Federeinrichtung anbringbar ist. Dadurch wird ermöglicht, dass ein Teil der Federeinrichtung "totgeschaltet" wird, wodurch der relative Federweg des übrigen Teils der Federeinrichtung und somit die vorgegebene Federvorspannung verändert wird. Mit anderen Worten: Mittels der Verstelleinrichtung wird der wirksame Teil der Federeinrichtung, d.h. der Teil, der beim Erreichen der Ausgangsstellung gespannt ist, verstellt.

Dabei kann beispielsweise vorgesehen sein, dass die Halterung das Angreifelement mit einem Gewinde aufweist, das in die als Spiralfeder ausgebildete Federeinrichtung einschraubbar ist. Durch das Gewinde wird der Teil der Spiralfeder, an dem das Gewinde anliegt, in vorgegebenem Abstand gehalten und wird somit bei der Spannung der Federeinrichtung unwirksam. Eine derartige Ausbildung ist auf konstruktiv einfache Art und Weise bereitstellbar, wobei gleichzeitig die Verstellung der Federvorspannung auf einfache Art und Weise erfolgen kann. Alternativ kann vorgesehen sein, dass das Angreifelement als Hülse mit innenliegendem Gewinde ausgebildet ist, in die die Spiralfeder einschraubbar ist.

Auch ist es möglich, dass das Angreifelement zwischen zwei Federwindungen eingreift und somit den wirksamen Teil der Federeinrichtung verkürzt. Dies kann an der Halterung verwirklicht sein, in dem die Halterung beispielsweise eine Hülse aufweist, in die die Federeinrichtung eingeführt ist, wobei das Angreifelement an der Hülse angeordnet ist. Alternativ kann das Angreifelement auch unabhängig von der Halterung verwirklicht sein, indem es beispielsweise an dem Gehäuse angebracht ist. Das Angreifteil kann dabei beispielsweise in ein Lochraster des Gehäuses eingreifen.

Nach einem Ausführungsbeispiel des erfindungsgemäßen Dämpfungssystems ist vorgesehen, dass die Verstelleinrichtung eine Halteeinrichtung aufweist, die an der als Spiralfeder ausgebildeten Federeinrichtung anbringbar ist und mehrere Windungen der Spiralfeder in einem vorgegebenen Abstand hält. Die Halteeinrichtung kann beispielsweise in der Mitte der Feder angeordnet sein. Die von der Halteeinrichtung in einem vorgegebenen Abstand gehaltenen Windungen der Spiralfeder sind bei der Spannung der Federeinrichtung unwirksam, wodurch ebenfalls die Federvorspannung verändert werden kann.

Die Erfindung betrifft ferner eine Schiebetür mit einem erfindungsgemäßen Dämpfungssystem mit Einzugsfunktion. Die Schiebetür weist eine Laufschiene mit einem geführten Laufwerk, mittels dem ein Türflügel der Schiebetür in der Laufschiene geführt wird, auf. Das erfindungsgemäße Dämpfungssystem kann in der Laufschiene angeordnet sein und der Koppler an dem Laufwerk. Alternativ ist es möglich, dass das Dämpfungssystem an dem Laufwerk angeordnet ist und der Koppler an der Laufschiene befestigt ist.

Im Folgenden wird unter Bezugnahme auf die nachfolgenden Figuren die Erfindung näher erläutert.

Es zeigen:
- Figur 1: eine schematische Schnittdarstellung einer erfindungsgemäßen Schiebetür mit einem erfindungsgemäßen Dämpfungssystem mit Einzugsfunktion,
- Figur 2: eine schematische Draufsicht auf das Dämpfungssystem der Figur 1 mit verschwenkter Dämpfungseinrichtung,
- Figuren 3a-3c: schematische Detaildarstellungen der Halterung der Federeinrichtung eines erfindungsgemäßen Dämpfungssystems und
- Figur 4: eine schematische Detaildarstellung einer Halteeinrichtung der Verstelleinrichtung eines erfindungsgemäßen Dämpfungssystems.

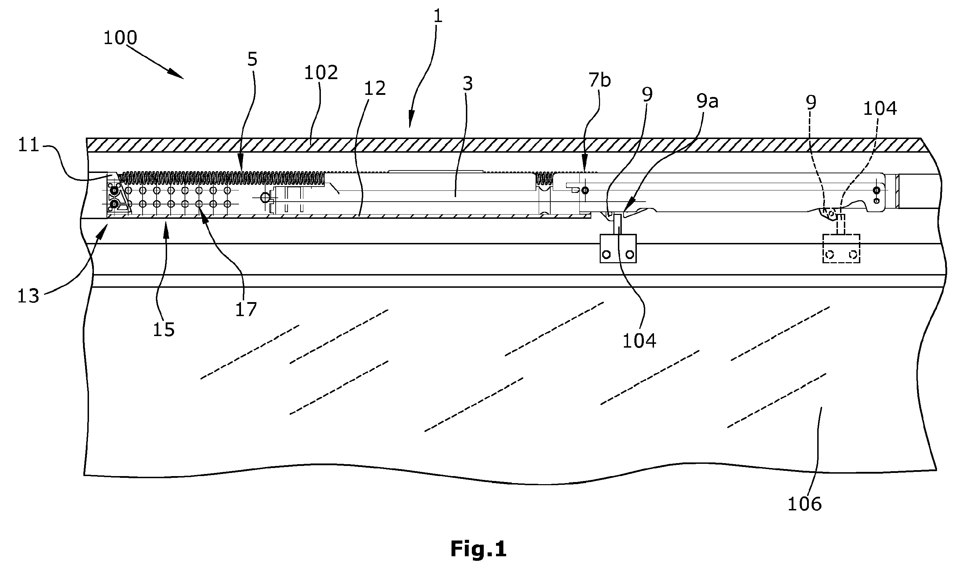

In Figur 1 ist eine erfindungsgemäße Schiebetür mit einem erfindungsgemäßen Dämpfungssystem 1 mit Einzugsfunktion schematisch dargestellt. Das Dämpfungssystem 1 ist an einer Laufschiene 102 der Schiebetür 100 befestigt.

Über einen Koppler 104, der am oberen Rand eines Türflügels 106 befestigt ist, wirkt das Dämpfungssystem 1 mit dem Türflügel 106 zusammen. Der Türflügel 106 ist mit einem nicht dargestellten Laufwerk in der Laufschiene 102 geführt.

Das Dämpfungssystem 1 mit Einzugsfunktion weist eine Dämpfungseinrichtung 3 und ein parallel zu der Dämpfungseinrichtung 3 wirkendes Federsystem 5 mit einer Federeinrichtung 7 auf. Ein Eingreifteil 9 weist eine Aussparung 9a auf, in die der Koppler 104 bei seinem Zusammenwirken mit dem Dämpfungssystem 1 eingreift. Das Eingreifteil 9 ist mit der Dämpfungseinrichtung 3 verbunden.

Die Federeinrichtung 7, die beispielsweise als Spiralfeder ausgebildet sein kann, ist mit ihrem ersten Ende 7a mit einer Halterung 11 verbunden. Mit dem zweiten Ende 7b ist die Federeinrichtung 7 mit dem Eingreifteil 9 verbunden.

Das Dämpfungssystem 1 weist ferner ein Gehäuse 12 auf, das die Dämpfungseinrichtung 3 und das Federsystem 5 zumindest teilweise umschließt. Die Halterung 11 ist an dem Gehäuse 12 befestigt.

Beim Schließen des Türflügels 106 greift der Koppler 104 in der Ausgangsstellung des Eingreifteils 9 (gestrichelte Position von Koppler 104 und Eingreifteil 9) in die Aussparung 9a des Eingreifteils 9 ein. Durch die Dämpfungseinrichtung 3 wird die Geschwindigkeit des Türflügels 106 abgebremst. Da das Federsystem 5 in der Ausgangsstellung eine vorgegebene Federspannung hat, zieht das Federsystem 5 das Eingreifteil 9 und somit den Koppler 104 und den Türflügel 106 entgegen der Dämpfungswirkung der Dämpfungseinrichtung 3 in Richtung der in Figur 1 dargestellten Endstellung. Durch die Dämpfungseinrichtung 3 und das Federsystem 5 wird somit gewährleistet, dass der Türflügel 106 sanft in die Endstellung verfahren wird, so dass es nicht zu Beschädigungen aufgrund einer zu hohen Geschwindigkeit kommen kann.

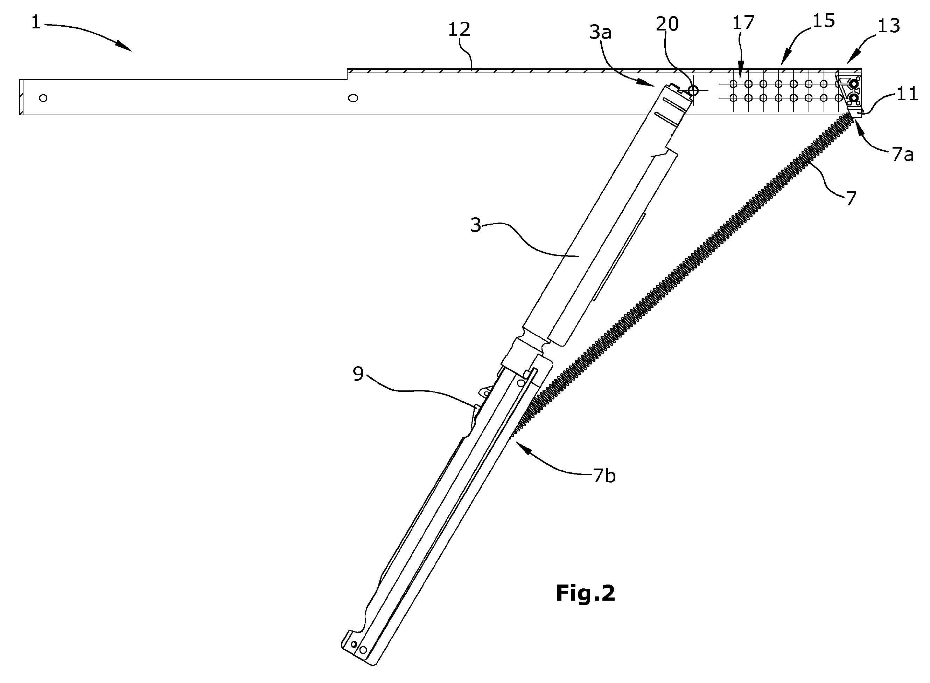

Das Federsystem 5 des erfindungsgemäßen Dämpfungssystems 1 weist ferner eine Verstelleinrichtung 13 auf, über die die vorgegebene Federvorspannung, die das Federsystem 5 in der Ausgangsstellung des Eingreifteils 9 aufweist, verstellt werden kann. Über die Verstelleinrichtung 13 ist dabei die Federvorspannung zumindest eines Teils der Federeinrichtung 7 verstellbar. Bei dem in Figuren 1 und 2 dargestellten Ausführungsbeispiel weist die Verstelleinrichtung 13 dazu eine Befestigungseinrichtung 15 auf, die ein in Längsrichtung des Dämpfungssystems 1 angeordnetes Lochraster 17 besitzt. Mittels des Lochrasters 17 ist die Halterung 11 an unterschiedlichen Positionen befestigbar. Die Befestigungseinrichtung 15 ist durch das Gehäuse 12 gebildet. Durch die Möglichkeit, die Halterung 11 an unterschiedlichen Positionen in Längsrichtung des Dämpfungssystems 1 zu befestigen, kann die Länge der Federeinrichtung 7, die die Federeinrichtung 7 in der Ausgangsstellung des Eingreifteils 9 besitzt, beeinflusst werden und somit Einfluss auf die Federvorspannung der Federeinrichtung 7 genommen werden.

Dadurch ist das erfindungsgemäße Dämpfungssystems 1 in besonders vorteilhafter Weise an den Verwendungszweck anpassbar. Da beim Öffnen des Türflügels 106 die Federeinrichtung 7 zum Erreichen der vorgegebenen Vorspannung in der Ausgangsstellung des Eingreifteils 9 gespannt werden muss, muss der Nutzer eine erhöhte Kraft beim Öffnen des Türflügels 106 aufbringen. Einerseits soll die aufzubringende Kraft beim Öffnen des Türflügels 106 möglichst gering sein, um ein komfortables Öffnen des Türflügels 106 zu ermöglichen, andererseits muss die Federvorspannung der Federeinrichtung 7 jedoch ausreichend groß sein, um ein zuverlässiges Einfahren des Türflügels 106 in die Endstellung zu gewährleisten. Durch das erfindungsgemäße Dämpfungssystem mit Verstelleinrichtung wird somit erreicht, dass eine Einstellung der Federvorspannung bei der Montage der Schiebetür 100 erfolgen kann, so dass das Dämpfungssystem 1 an die tatsächlichen Gegebenheiten am Montageort anpassbar ist. Die vorgegebene Federvorspannung kann somit so gering eingestellt werden, dass gerade noch die Einzugsfunktion gegeben ist, so dass der Komfort beim Öffnen des Türflügels 106 besonders hoch ist. Ferner ermöglicht das erfindungsgemäße Dämpfungssystem 1, dass zu einem späteren Zeitpunkt, beispielsweise bei der Wartung der Schiebetür 100, die Federverspannung an veränderte Anforderungen, die beispielsweise durch einen erhöhten Rollwiderstand durch Verschleiß gegeben sein können, angepasst werden kann, so dass ohne einen Austausch des Dämpfungssystem 1 die Einzugsfunktion gewährleistet werden kann.

In der in Figur 1 dargestellten Endstellung besitzt das Federsystem 5 eine Federvorspannung, da anderenfalls ein zuverlässiges Einfahren in die Endstellung nicht möglich ist. Daher ist diese Federvorspannung bei dem Lösen der Halterung 11 von der Befestigungseinrichtung 15 problematisch bzw. bei der Bedienung der Verstelleinrichtung muss eine hohe Kraft zur Überwindung bzw. Erhöhung der Federvorspannung aufgebracht werden.

Um ein komfortables Verstellen der Federvorspannung zu ermöglichen, ist die Dämpfungseinrichtung 3 verschwenkbar an dem Gehäuse 12 angebracht. Dies erfolgt über ein Drehgelenk 20, das an dem von dem Eingreifteil 9 abgewandten Ende 3a der Dämpfungseinrichtung 3 angeordnet ist. Mittels des Drehgelenks 20 lässt sich die Dämpfungseinrichtung 3 aus dem Gehäuse 12 herausschwenken, so dass durch das Herausschwenken der Abstand zwischen der Halterung 11 und dem Eingreifteil 9 und somit der Abstand zwischen dem ersten und dem zweiten Ende 7a, 7b der Federeinrichtung 7 verkürzt wird. Dadurch ist die Federeinrichtung 7 vollständig oder fast vollständig entspannt und die Halterung 11 kann bequem an einer anderen Position der Befestigungseinrichtung 15 befestigt werden. Durch das Zurückschwenken der Dämpfungseinrichtung 3 wird dann die Federeinrichtung 7 gespannt.

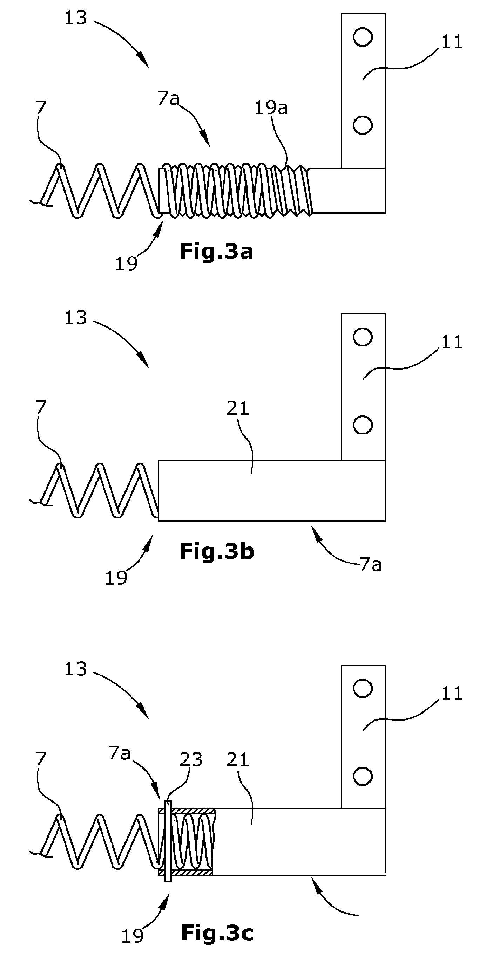

In den Figuren 3a-3c sind unterschiedliche Ausgestaltungen der Halterung 11, die am ersten Ende 7a der Federeinrichtung 7 befestigt ist, dargestellt. Die in den Figuren 3a-3c dargestellten Halterungen 11 sind Teil der Verstelleinrichtung 13. Sie können zusätzlich oder unabhängig von der in den Figuren 1 und 2 dargestellten Befestigungseinrichtung 15 mit Lochraster 17 verwendet werden.

In Figur 3a weist die Halterung 11 ein Angreifelement 19 auf, das aus einem Bolzen mit einem außenliegenden Gewinde 19a ausgebildet ist. Die Federeinrichtung 7 ist als Spiralfeder verwirklicht. Das Gewinde 19a ist dabei an die Windungen der Spiralfeder im entspannten Zustand angepasst. Die Halterung 11 kann somit in die Federeinrichtung 7 eingeschraubt werden. Das Gewinde 19a bewirkt dabei, dass die Windungen des Teils der Federeinrichtung 7, die das Gewinde 19a berühren, in dem Abstand gehalten werden, indem sie in einem entspannten Zustand sind. Dadurch wird der das Gewinde 19a berührende Teil der Federeinrichtung 7 "totgeschaltet" und verbleibt beim Spannen der Federeinrichtung 7 im entspannten Zustand. Der übrige Teil der Federeinrichtung 7 wird nun beim Spannen stärker gespannt, so dass eine höhere Federvorspannung erreicht werden kann. Mittels der Verstelleinrichtung 13 kann somit bei der Spannung der Federeinrichtung 7 wirksame Teil der Federeinrichtung 7 beeinflusst werden.

In Figur 3b ist eine Abwandlung des Ausführungsbeispiels der Halterung 11 der Figur 3a dargestellt. In diesem Ausführungsbeispiel weist die Halterung 11 ein Angreifelement 19 mit einer Hülse 21 auf, die ein innenliegendes Gewinde besitzt. Das Gewinde ist an die Windungen der Federeinrichtung 7 angepasst, so dass die Federeinrichtung 7 in die Hülse 21 eingeschraubt werden kann und das Gewinde die Windungen des das Gewinde berührenden Teils der Federeinrichtung 7 in einem vorgegebenen Abstand hält. Das in Figur 3b dargestellte Ausführungsbeispiel der Halterung 11 weist somit eine vergleichbare Funktion wie das in Figur 3a dargestellte Ausführungsbeispiel auf.

In Figur 3c ist eine Abwandlung der Halterung 11 der Figur 3b dargestellt. Die Halterung 11 weist ein Angreifteil 19 mit einer Hülse 21 auf, in die die Federeinrichtung 7 teilweise eingeschoben werden kann. In diesem Ausführungsbeispiel weist die Hülse 21 jedoch kein innenliegendes Gewinde auf. Ein Bolzen 23 wird in eine Aufnahme der Hülse 21 eingeschoben, so dass der Bolzen 23 die Federeinrichtung 7 zwischen zwei Windungen der Federeinrichtung 7 durchdringt. Auf diese Weise wird der in der Hülse 21 angeordnete Teil der Federeinrichtung 7 "totgeschaltet", da die Federeinrichtung mittels der den Bolzen 23 berührenden Windung an der Halterung 11 gehalten wird.

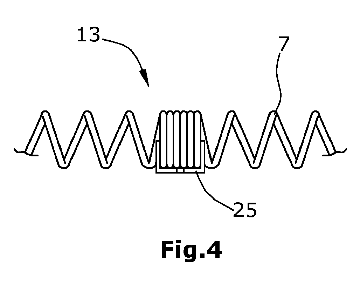

In Figur 4 ist ein alternatives Ausführungsbeispiel der Verstelleinrichtung gezeigt. Die Verstelleinrichtung 13 weist bei diesem Ausführungsbeispiel eine Halteeinrichtung 25 auf, die mehrere Windungen der als Spiralfeder ausgebildeten Federeinrichtung 7 in einem vorgegebenen Abstand hält. Auch mittels einer derartigen Halteeinrichtung ist der wirksame Teil der Federeinrichtung 7 veränderbar. Dabei kann die Halteeinrichtung 25 in ihrer Länge verstellt werden, beispielsweise über ein nicht dargestelltes Gewinde, oder es können unterschiedliche Halteeinrichtungen 25 verwendet werden.

## Patentansprüche

1. Dämpfungssystem (1) mit Einzugsfunktion
mit einer Dämpfungseinrichtung (3) zum Abbremsen einer Relativbewegung zwischen dem Dämpfungssystem (1) und einem mit dem Dämpfungssystem (1) zusammenwirkenden Koppler (104),
mit einem parallel zu der Dämpfungseinrichtung (3) wirkenden Federsystem (5) mit einer Federeinrichtung (7), wobei eine Halterung (11) mit einem ersten Ende (7a) der Federeinrichtung (7) verbunden ist und über die Halterung (11) das erste Ende (7a) der Federeinrichtung (7) ortsfest befestigbar ist, und
mit einem mit dem Koppler (104) zusammenwirkenden Eingreifteil (9), wobei das Eingreifteil (9) mit der Dämpfungseinrichtung (3) und mit einem zweiten Ende (7b) der Federeinrichtung (7) verbunden ist,
und wobei das Federsystem (5) in einer Ausgangsstellung des Eingreifteils (9) eine vorgegebene Federvorspannung aufweist,
**dadurch gekennzeichnet,**
**dass** das Federsystem (5) eine Verstelleinrichtung (13) zur Verstellung der vorgegebenen Federvorspannung aufweist, wobei über die Verstelleinrichtung (13) die Federvorspannung zumindest eines Teils der Federeinrichtung (7) verstellbar ist.

2. Dämpfungssystem nach Anspruch 1, **dadurch gekennzeichnet, dass** die Verstelleinrichtung (13) durch die Halterung (11) und eine Befestigungseinrichtung (15) gebildet ist, wobei die Halterung (11) an verschiedenen Positionen an der Befestigungseinrichtung (15) befestigbar ist.

3. Dämpfungssystem nach Anspruch 2, **dadurch gekennzeichnet, dass** die Befestigungseinrichtung (15) ein Lochraster (17) aufweist, an dem die Halterung (11) befestigbar ist.

4. Dämpfungssystem nach einem der Ansprüche 1 bis 3, **gekennzeichnet durch** ein Gehäuse (12), in dem die Dämpfungseinrichtung (3) und das Federsystem (5) zumindest teilweise aufgenommen sind.

5. Dämpfungssystem nach Anspruch 4, **dadurch gekennzeichnet, dass** das Gehäuse (12) die Befestigungseinrichtung (15) bildet.

6. Dämpfungssystem nach einem der Ansprüche 1 bis 5, **dadurch gekennzeichnet, dass** die Federeinrichtung (7) als Spiralfeder ausgebildet ist.

7. Dämpfungssystem nach einem der Ansprüche 4 bis 6, **dadurch gekennzeichnet, dass** die Dämpfungseinrichtung (3) mit dem von dem Eingreifteil (9) abgewandten Ende (3a) verschwenkbar an dem Gehäuse (12) angebracht ist.

8. Dämpfungssystem nach einem der Ansprüche 1 bis 7, **dadurch gekennzeichnet, dass** die Verstelleinrichtung (13) ein Angreifelement (19) aufweist, das an verschiedenen Positionen an der Federeinrichtung (7) anbringbar ist.

9. Dämpfungssystem nach Anspruch 8, **dadurch gekennzeichnet, dass** die Halterung (11) das Angreifelement (19) mit einem Gewinde (19a) aufweist, das in die als Spiralfeder ausgebildete Federeinrichtung (7) einschraubbar ist.

10. Dämpfungssystem nach einem der Ansprüche 6 bis 9, **dadurch gekennzeichnet, dass** die Verstelleinrichtung (13) eine Halteeinrichtung (25) aufweist, die an der als Spiralfeder ausgebildeten Federeinrichtung (7) anbringbar ist und mehrere Windungen der Spiralfeder (7) in einem vorgegebenen Abstand hält.

11. Schiebetür (100) mit einem Dämpfungssystem mit Einzugsfunktion nach einem der Ansprüche 1 bis 10.
